# EUROPEAN PATENT APPLICATION

(11) **EP 4 535 887 A1**
(43) Date of publication of application: **09.04.2025**
(21) Application number: 22944303.1
(22) Date of filing: 01.06.2022
(51) Int. Cl.: H04W 72/00

(54) **RESOURCE CONFIGURATION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/096710
(87) International publication number: WO 2023/230972

(57) **Abstract**

Disclosed in the embodiments of the present application are a resource configuration method and apparatus. The method comprises: receiving random access channel (RACH) configuration information, which is sent by a network device and is used for multiple-physical random access channel (multi-PRACH) transmission (201); according to the RACH configuration information for multi-PRACH transmission, determining a configuration resource for multi-PRACH transmission (202); and performing multi-PRACH transmission on the configuration resource (203). Therefore, a terminal device can perform multiple PRACH transmissions in one attempt at random access, thereby improving coverage of a PRACH, effectively increasing the success rate of random access of the terminal device, and improving the communication efficiency of a system.

## Description

### TECHNICAL FIELD

The present application relates to the field of communication technology, and in particular to a method and a device for resource configuration.

### BACKGROUND

In a 5G NR (New Radio) system, a terminal device can initiate a random access (RA) procedure to a network device, and the random access procedure can be a four-step (4-step) random access or a two-step (2-step) random access.

One of the bottlenecks of uplink coverage is the Physical Random Access Channel (PRACH). In order to improve the coverage of PRACH, 3GPP Release 18 is preparing to develop a program based on multiple PRACH transmissions. The NR system also supports the configuration of different PRACH resources for terminal devices with different feature combinations. How to configure a configuration resource for the multiple PRACH transmissions is an issue that needs to be considered.

### SUMMARY

Embodiments of a first aspect of the present application provide a method for resource configuration, performed by a terminal device, including:
receiving random access channel (RACH) configuration information for multiple PRACH transmissions sent by a network device;
determining a configuration resource for the multiple PRACH transmissions according to the RACH configuration information for the multiple PRACH transmissions; and
performing the multiple PRACH transmissions on the configuration resource.

Optionally, the RACH configuration information for the multiple PRACH transmissions includes at least one of:
a first RACH resource configuration, in which the first RACH resource configuration is suitable for a terminal device supporting a feature combination for coverage enhancement;
a second RACH resource configuration, in which the second RACH resource configuration is suitable for a terminal device supporting other feature combinations; or
a third RACH resource configuration, in which the third RACH resource configuration is suitable for a terminal device supporting no feature combination.

Optionally, the configuration resource for the multiple PRACH transmissions is at least one of:
a RACH occasion (RO) shared with a RACH configuration resource not configured for the multiple PRACH transmissions; or
a separate RACH occasion (RO) dedicated to the multiple PRACH transmissions.

Optionally, in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

Optionally, in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-Frequency Start;
zeroCorrelationZoneConfig;
preambleReceivedTargetPower;
preambleTransMax;
powerRamping Step;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

Optionally, the number of the multiple PRACH transmissions has a correspondence with the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

Optionally, in response to the RACH configuration information for the multiple PRACH transmissions including the first RACH resource configuration, the first RACH resource configuration includes first indication information, and the first indication information is configured to indicate that the first RACH resource configuration is configured for the multiple PRACH transmissions.

Optionally, in response to the RACH configuration information for the multiple PRACH transmissions including the second RACH resource configuration, feature combination indication information in the second RACH resource configuration includes second indication information, and the second indication information is configured to indicate that the second RACH resource configuration is configured for the multiple PRACH transmissions.

Optionally, the RACH configuration information for the multiple PRACH transmissions includes: RACH resource configuration information for 4-step random access and/or RACH resource configuration information for 2-step random access.

Optionally, in response to the RACH configuration information for the multiple PRACH transmissions including the first RACH resource configuration, the first RACH resource configuration includes RACH resource configuration information for the 4-step random access.

Optionally, the RACH configuration information for the multiple PRACH transmissions includes: RACH resource configuration information for contention based random access (CBRA) and/or RACH resource configuration information for contention free random access (CFRA).

Optionally, the RACH configuration information for the multiple PRACH transmissions includes at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block SSB indexes for the multiple PRACH transmissions.

Optionally, the RACH resource configuration information for the CFRA includes at least one of:
a RACH resource configuration for the CFRA triggered based on a physical downlink control channel (PDCCH) order;
a RACH resource configuration for the CFRA triggered based on cell handover;
a RACH resource configuration for the CFRA triggered based on addition or change of primary secondary cell; or
a RACH resource configuration for the CFRA triggered based on beam failure recovery (BFR).

Optionally, the RACH resource configuration information for the CBRA includes at least one of :
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

Embodiments of a second aspect of the present application provide a method for resource configuration, performed by a network device, including:
sending random access channel (RACH) configuration information for multiple PRACH transmissions to the terminal device;
the RACH configuration information for the multiple PRACH transmissions is configured to determine a configuration resource for the multiple PRACH transmissions; and
the configuration resource is configured to perform the multiple PRACH transmissions.

Optionally, the RACH configuration information for the multiple PRACH transmissions includes at least one of:
a first RACH resource configuration, in which the first RACH resource configuration is suitable for a terminal device supporting a feature combination for coverage enhancement;
a second RACH resource configuration, in which the second RACH resource configuration is suitable for a terminal device supporting other feature combinations; or
a third RACH resource configuration, in which the third RACH resource configuration is suitable for a terminal device supporting no feature combination.

Optionally, the configuration resource for the multiple PRACH transmissions is at least one of:
a RACH occasion (RO) shared with a RACH configuration resource not configured for the multiple PRACH transmissions;
a separate RACH occasion (RO) dedicated to the multiple PRACH transmissions.

Optionally, in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles;
number of the multiple PRACH transmissions.

Optionally, in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-FrequencyStart;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootS equenceIndex;
number of the multiple PRACH transmissions.

Optionally, the number of the multiple PRACH transmissions has a correspondence with to the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

Optionally, in response to the RACH configuration information for the multiple PRACH transmissions including the first RACH resource configuration, the first RACH resource configuration includes first indication information, and the first indication information is configured to indicate that the first RACH resource configuration is configured for the multiple PRACH transmissions.

Optionally, in response to the RACH configuration information for the multiple PRACH transmissions including the second RACH resource configuration, feature combination indication information in the second RACH resource configuration includes second indication information, and the second indication information is configured to indicate that the second RACH resource configuration is configured for the multiple PRACH transmissions.

Optionally, the RACH configuration information for the multiple PRACH transmissions includes: RACH resource configuration information for 4-step random access and/or RACH resource configuration information for 2-step random access.

Optionally, in response to the RACH configuration information for the multiple PRACH transmissions including the first RACH resource configuration, the first RACH resource configuration includes the RACH resource configuration information for the 4-step random access.

Optionally, the RACH configuration information for the multiple PRACH transmissions includes: RACH resource configuration information for contention based random access (CBRA) and/or RACH resource configuration information for contention free random access (CFRA).

Optionally, the RACH configuration information for the multiple PRACH transmissions includes at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block SSB indexes for the multiple PRACH transmissions.

Optionally, the RACH resource configuration information for the CFRA includes at least one of:
a RACH resource configuration for the CFRA triggered based on a physical downlink control channel (PDCCH) order;
a RACH resource configuration for the CFRA triggered based on cell handover;
a RACH resource configuration for the CFRA triggered based on addition or change of primary secondary cell; or
a RACH resource configuration for the CFRA triggered based on beam failure recovery (BFR).

Optionally, the RACH resource configuration information for the CBRA includes at least one of:
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

Embodiments of a third aspect of the present application provide a device for resource configuration, applied to a terminal device, including:
a transceiver unit configured to receive random access channel (RACH) configuration information for multiple PRACH transmissions sent by a network device; and
a processing unit configured to determine a configuration resource for the multiple PRACH transmissions according to the RACH configuration information for the multiple PRACH transmissions,
the transceiver unit is also configured to carry out the multiple PRACH transmissions on the configuration resource.

Optionally, the RACH configuration information for the multiple PRACH transmissions includes at least one of:
a first RACH resource configuration, in which the first RACH resource configuration is suitable for a terminal device supporting a feature combination for coverage enhancement;
a second RACH resource configuration, in which the second RACH resource configuration is suitable for a terminal device supporting other feature combinations; or
a third RACH resource configuration, in which the third RACH resource configuration is suitable for a terminal device supporting no feature combination.

Optionally, the configuration resource for the multiple PRACH transmissions is at least one of:
a RACH occasion (RO) shared with a RACH configuration resource not configured for the multiple PRACH transmissions; or
a separate RACH occasion (RO) dedicated to the multiple PRACH transmissions.

Optionally, in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

Optionally, in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-FrequencyStart;
zeroCorrelationZoneConfig;
preambleReceivedTargetPower;
preambleTransMax;
powerRamping Step;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

Optionally, the number of the multiple PRACH transmissions has a correspondence with to the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

Optionally, in response to the RACH configuration information for the multiple PRACH transmissions including first RACH resource configuration, the first RACH resource configuration includes first indication information, and the first indication information is configured to indicate that the first RACH resource configuration is configured for the multiple PRACH transmissions.

Optionally, in response to the RACH configuration information for the multiple PRACH transmissions includes the second RACH resource configuration, feature combination indication information in the second RACH resource configuration includes second indication information, and the second indication information is configured to indicate that the second RACH resource configuration is configured for the multiple PRACH transmissions.

Optionally, the RACH configuration information for the multiple PRACH transmissions includes: RACH resource configuration information for 4-step random access and/or RACH resource configuration information for 2-step random access.

Optionally, in response to the RACH configuration information for the multiple PRACH transmissions including the first RACH resource configuration, the first RACH resource configuration includes the RACH resource configuration information for the 4-step random access.

Optionally, the RACH configuration information for the multiple PRACH transmissions includes: RACH resource configuration information for contention based random access (CBRA) and/or RACH resource configuration information for contention free random access (CFRA).

Optionally, the RACH configuration information for the multiple PRACH transmissions includes at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block SSB indexes for the multiple PRACH transmissions.

Optionally, the RACH resource configuration information for the CFRA includes at least one of:
a RACH resource configuration for the CFRA triggered based on a physical downlink control channel (PDCCH) order;
a RACH resource configuration for the CFRA triggered based on cell handover;
a RACH resource configuration for the CFRA triggered based on addition or change of primary secondary cell; or
a RACH resource configuration for the CFRA triggered based on beam failure recovery (BFR).

Optionally, the RACH resource configuration information for the CBRA includes at least one of:
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

Embodiments of a fourth aspect of the present application provide a device for resource configuration, applied to a network device, including:
a transceiver unit configured to send random access channel (RACH) configuration information for multiple PRACH transmissions to a terminal device,
the RACH configuration information for the multiple PRACH transmissions is configured to determine a configuration resource for the multiple PRACH transmissions; and
the configuration resource is configured to perform the multiple PRACH transmissions.

Optionally, the RACH configuration information for the multiple PRACH transmissions includes at least one of:
a first RACH resource configuration, in which the first RACH resource configuration is suitable for a terminal device supporting a feature combination for coverage enhancement;
a second RACH resource configuration, in which the second RACH resource configuration is suitable for a terminal device supporting other feature combinations; or
a third RACH resource configuration, in which the third RACH resource configuration is suitable for a terminal device supporting no feature combinations.

Optionally, the configuration resource for the multiple PRACH transmissions is at least one of:
a RACH occasion (RO) shared with a RACH configuration resource not configured for the multiple PRACH transmissions; or
a separate RACH occasion (RO) dedicated to the multiple PRACH transmissions.

Optionally, in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

Optionally, in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-Frequency Start;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

Optionally, the number of the multiple PRACH transmissions has a correspondence with to the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

Optionally, in response to the RACH configuration information for the multiple PRACH transmissions including the first RACH resource configuration, the first RACH resource configuration includes first indication information, and the first indication information is configured to indicate that the first RACH resource configuration is configured for the multiple PRACH transmissions.

Optionally, in response to the RACH configuration information for the multiple PRACH transmissions including the second RACH resource configuration, feature combination indication information in the second RACH resource configuration includes second indication information, and the second indication information is configured to indicate that the second RACH resource configuration is configured for the multiple PRACH transmissions.

Optionally, the RACH configuration information for the multiple PRACH transmissions includes: RACH resource configuration information for 4-step random access and/or RACH resource configuration information for 2-step random access.

Optionally, in response to the RACH configuration information for the multiple PRACH transmissions includes the first RACH resource configuration, the first RACH resource configuration includes the RACH resource configuration information for the 4-step random access.

Optionally, the RACH configuration information for the multiple PRACH transmissions includes: RACH resource configuration information for contention based random access (CBRA) and/or RACH resource configuration information for contention free random access (CFRA).

Optionally, the RACH configuration information for the multiple PRACH transmissions includes at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block SSB indexes for the multiple PRACH transmissions.

Optionally, the RACH resource configuration information for the CFRA includes at least one of:
a RACH resource configuration for the CFRA triggered based on a physical downlink control channel (PDDCH) order;
a RACH resource configuration for the CFRA triggered based on cell handover;
a RACH resource configuration for the CFRA triggered based on addition or change of primary secondary cell; or
a RACH resource configuration for the CFRA triggered based on beam failure recovery (BFR).

Optionally, the RACH resource configuration information for the CBRA includes at least one of:
a RACH resource configuration for the CBRA triggered based on beam failure recovery (BFR);
a RACH resource configuration for the CBRA triggered based on cell handover;
a RACH resource configuration for the CBRA triggered based on addition or change of primary secondary cell.

Embodiments of a fifth aspect of the present application provide a communication device, and the device includes a processor and a memory. A computer program is stored on the memory, and the processor executes the computer program stored on the memory, to cause the device to a method for resource configuration described in the embodiments of the first aspect.

Embodiments of a sixth aspect of the present application provide a communication device, and the device includes a processor and a memory. A computer program is stored on the memory, and the processor executes the computer program stored on the memory, to cause the device to perform a method for resource configuration described in the embodiments of the second aspect.

Embodiments of a seventh aspect of the present application provide a communication device, and the device includes a processor and an interface circuit. The interface circuit is configured to receive code instructions and transmit them to the processor, and the processor is configured to run the code instructions to enable the device to perform a method for resource configuration described in the embodiments of the first aspect.

Embodiments of an eighth aspect of the present application provide a communication device, and the device includes a processor and an interface circuit. The interface circuit is configured to receive code instructions and transmit them to the processor, and the processor is configured to run the code instructions to enable the device to perform a method for resource configuration described in the embodiments of the second aspect.

Embodiments of a ninth aspect of the present application provide a computer-readable storage medium configured to store instructions, and when the instructions are executed, the medium enables a method for resource configuration described in embodiments of the first aspect to be realized.

Embodiments of a tenth aspect of the present application provide a computer-readable storage medium configured to store instructions, and when the instructions are executed, the medium enables a method for resource configuration described in embodiments of the second aspect to be realized.

Embodiments of an eleventh aspect of the present application provide a computer program, which, when run on a computer, causes the computer to perform a method for resource configuration described in embodiments of the first aspect.

Embodiments of a twelfth aspect of the present application provide a computer program, which, when run on a computer, causes the computer to perform a method for resource configuration described in embodiments of the second aspect.

Embodiments of the present application provide a method and a device for resource configuration, by receiving random access channel (RACH) configuration information for the multiple PRACH transmissions sent by a network device; determining the configuration resource for the multiple PRACH transmissions according to the RACH configuration information for the multiple PRACH transmissions; and performing the multiple PRACH transmissions on the configuration resource, the terminal device can perform the multiple PRACH transmissions in an attempt for the random access, improve the coverage of the physical random access channel (PRACH), effectively improve the success rate of random access of the terminal device, and improve communication efficiency of a system.

The additional aspects and advantages of the present application will be given in part in the description below, and the part will become apparent from the description below, or as known through the practice of the present application.

### BRIEF DESCRIPTION OF THE DRAWINGS

In order to more clearly illustrate the technical solutions in embodiments of the present application or the background art, the drawings required to be used in embodiments or background art of the present application are described below.
FIG. 1 is a schematic diagram of an architecture of a communication system provided in an embodiment of the present application;
FIG. 2 is a schematic flowchart of a method for resource configuration provided in an embodiment of the present application;
FIG. 3 is a schematic flowchart of a method for resource configuration provided in an embodiment of the present application;
FIG. 4 is a schematic flowchart of a method for resource configuration provided in an embodiment of the present application;
FIG. 5 is a schematic flowchart of a method for resource configuration provided in an embodiment of the present application;
FIG. 6 is a schematic flowchart of a method for resource configuration provided in an embodiment of the present application;
FIG. 7 is a schematic flowchart of a method for resource configuration provided in an embodiment of the present application;
FIG. 8 is a structural schematic diagram of a device for resource configuration provided in an embodiment of the present application;
FIG. 9 is a structural schematic diagram of a device for resource configuration provided in an embodiment of the present application;
FIG. 10 is a structural schematic diagram of another device for resource configuration provided in an embodiment of the present application;
FIG. 11 is a structural schematic diagram of a chip provided in an embodiment of the present application.

### DETAILED DESCRIPTION

Illustrative embodiments are described in detail here, and examples are shown in the accompanying drawings. When the following description relates to drawings, the same number in different drawings represents the same or similar elements, unless otherwise indicated. The implementations described in the following illustrative embodiments do not represent all implementations consistent with embodiments of the present application. Rather, they are merely examples of devices and methods that are consistent with some aspects of embodiments of the present application as detailed in the attached claims.

The terms used in embodiments of the present application are for the purpose of describing specific embodiments only and are not intended to limit embodiments of the present application. The singular forms "a" and "the" used in embodiments of the present application and the attached claims are also intended to include the plural form, unless the context clearly indicates other meanings. It should also be understood that the term "and/or" as used herein refers to and encompasses any or all possible combinations of one or more associated listed items.

It should be understood that, although the terms first, second, third, etc., may be used to describe various information in embodiments of the present application, such information should not be limited to these terms. These terms are only used to distinguish the same type of information from each other. For example, without departing from the scope of embodiments of the present application, the first information may also be referred to as the second information, and similarly, the second information may also be referred to as the first information. Depending on the context, the words "if" and "in case" as used here can be interpreted as "at the time of" or "when" or "in response to determining".

Embodiments of the present application are described in detail below, and examples of embodiment are shown in the accompanying drawings where identical or similar designations indicate the same or similar elements throughout. The embodiments described below by reference to the drawings are illustrative and are intended to be used in the interpretation of the present application and should not be construed as a limitation on the present application.

In order to better understand a method for resource configuration disclosed in embodiments of the present application, a communication system suitable for embodiments of the present application is first described below.

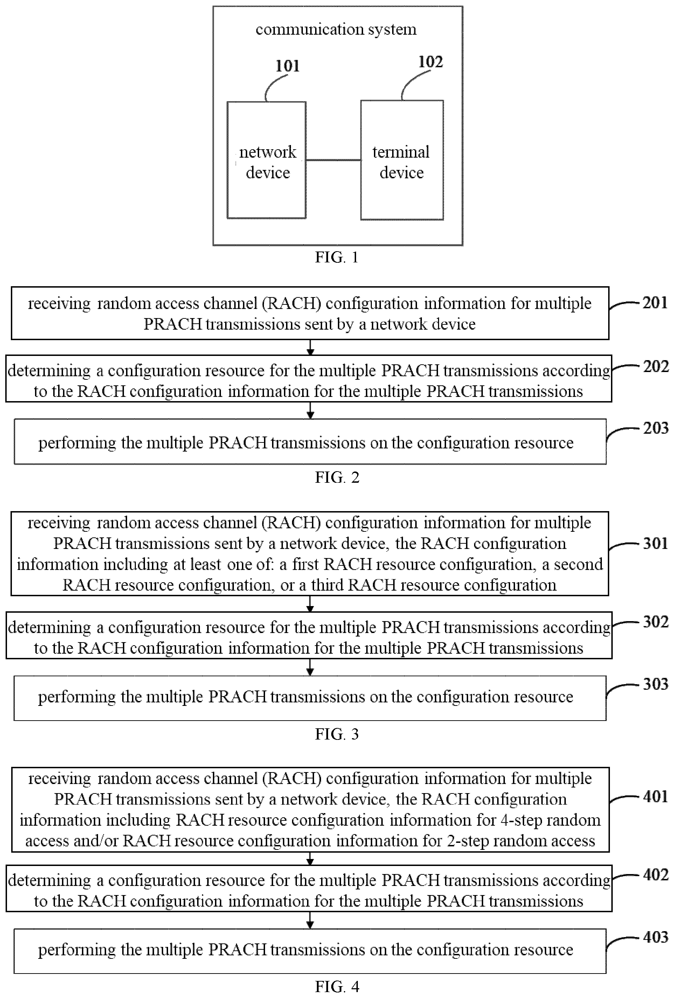

Please refer to FIG. 1, which is a schematic diagram of architecture of a communication system provided in an embodiment of the present application. The communication system may include, but is not limited to, one network device and one terminal device, the number and form of devices shown in FIG. 1 are only for example and do not constitute a limitation on embodiments of the present application, and two or more network devices and two or more terminal devices may be included in a practical application. The communication system shown in FIG. 1 is an illustrative example that includes one network device 101 and one terminal device 102.

It should be noted that the technical solution of embodiments of the present application can be applied to various communication systems, e.g., a Long Term Evolution (LTE) system, a fifth-generation mobile communication system, a 5G new radio system, or other new mobile communication systems in the future.

The network device 101 in embodiments of the present application is an entity on a network side for transmitting or receiving signals. For example, the network device 101 may be an Evolved NodeB (eNB), a Transmission Reception Point (TRP), a Next Generation NodeB (gNB) in NR systems, a base station in other future mobile communication systems, or an access node in wireless fidelity (WiFi) systems. Embodiments of the present application do not limit the specific technology and specific device form adopted by the network device. The network device provided in embodiments of the present application may be comprised of a central unit (CU) and a distributed unit (DU). The CU may also be called a control unit, and the structure of the CU-DU can be used to split the protocol layer of the network device, such as a base station, the functions of some of the protocol layers are centrally controlled in the CU, and the functions of the remaining part or all of the protocol layers are distributed in the DU. The DU is centrally controlled by the CU.

The terminal device 102 in embodiments of the present application is an entity on the user side for receiving or transmitting signals, such as a mobile phone. The terminal device can also be referred to as terminal, user equipment (UE), mobile station (MS), mobile terminal (MT), etc. The terminal device can be a car with communication function, a smart car, a mobile phone, a wearable device, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grids, a wireless terminal device in transportation safety, a wireless terminal device in smart city, and a wireless terminal device in a smart home and so on. Embodiments of the present application do not limit the specific technology and specific device form used in the terminal device.

In a 5G NR (New Radio) system, the terminal device 102 can initiate a random access (RA) procedure to the network device 101, and the random access procedure can be a four-step random access (4-step RA) or a two-step random access (2-step RA).

One of the bottlenecks of uplink coverage is the Physical Random Access Channel (PRACH). In order to improve the coverage of PRACH, 3GPP Release 18 is preparing to develop a program based on multiple PRACH transmissions.

The NR system also supports the configuration of different PRACH resources for terminal devices with different feature combinations. The feature combinations support the following combinations of features:
Coverage Enhancement; Reduced Capability (RedCap); Small Data Transmission (SDT); or Slice.

How to configure a configuration resource for the multiple PRACH transmissions is an issue that needs to be considered.

It is understandable that the communication system described in embodiments of the present application is for the purpose of more clearly illustrating the technical solution of embodiments of the present application, and does not constitute a limitation on the technical solution provided by embodiments of the present application, and those skilled in the art can know that with the evolution of the system architecture and the emergence of new business scenarios, the technical solution provided in embodiments of the present application is equally suitable for similar technical problems.

The following is a detailed introduction to the method for resource configuration and its device provided in the present application in conjunction with the accompanying drawings.

Please refer to FIG. 2, which is a schematic flowchart of a method for resource configuration provided in an embodiment of the present application. It should be noted that the method for resource configuration of embodiments of the present application is performed by a terminal device. The method may be executed separately or in combination with any one of the other embodiments of the present application. As shown in FIG. 2, the method can include the following steps.

Step 201, random access channel (RACH) configuration information for multiple PRACH transmissions sent by the network device is received.

In embodiments of the present application, the terminal device receives the RACH (Random Access Channel) configuration information for the multiple PRACH transmissions sent by the network device.

In some implementations, the RACH configuration information for the multiple PRACH transmissions includes at least one of:
a first RACH resource configuration, in which the first RACH resource configuration is suitable for a terminal device supporting a feature combination of coverage enhancement;
a second RACH resource configuration, in which the second RACH resource configuration is suitable for a terminal device supporting other feature combinations;
a third RACH resource configuration, in which the third RACH resource configuration is suitable for a terminal device supporting no feature combination.

Optionally, in response to the RACH configuration information for the multiple PRACH transmissions including the first RACH resource configuration, the first RACH resource configuration is configured to indicate that the first RACH resource configuration is configured for the multiple PRACH transmissions.

In one possible implementation, the first RACH resource configuration may include first indication information, and the first indication information is configured to indicate that the first RACH resource configuration is configured for the multiple PRACH transmissions. In another possible implementation, the first RACH resource configuration is the one configured to indicate that the first RACH resource configuration is configured for the multiple PRACH transmissions; that is, when the terminal device receives the first RACH resource configuration, it can determine that the first RACH resource is configured for the multiple PRACH transmissions at once.

Optionally, in response to the RACH configuration information for the multiple PRACH transmissions including the second RACH resource configuration, feature combination indication information in the second RACH resource configuration is configured to indicate that the second RACH resource configuration is configured for the multiple PRACH transmissions.

In one possible implementation, the feature combination indication of the second RACH resource configuration may include second indication information, and the second indication information is configured to indicate that the second RACH resource configuration is configured for the multiple PRACH transmissions. In another possible implementation, the second RACH resource configuration or the feature combination indication information of the second RACH resource configuration is the one configured to indicate that the second RACH resource configuration is configured for the multiple PRACH transmissions; that is, when the terminal device receives the second RACH resource configuration or the feature combination indication information of the second RACH resource configuration, it can determine that the second RACH resource configuration is configured for the multiple PRACH transmissions at once.

In some implementations, the RACH configuration information for the multiple PRACH transmissions includes: RACH resource configuration information for 4-step random access and/or RACH resource configuration information for 2-step random access.

That is, as a possible implementation, the RACH configuration information for the multiple PRACH transmissions includes: the RACH resource configuration information for 4-step random access.

As another possible implementation, the RACH configuration information for the multiple PRACH transmissions includes: the RACH resource configuration information for 2-step random access.

As yet another possible implementation, the RACH configuration information for the multiple PRACH transmissions includes: the RACH resource configuration information for 4-step random access and the RACH resource configuration information for 2-step random access.

Optionally, in response to the RACH configuration information for the multiple PRACH transmissions including the first RACH resource configuration, the first RACH resource configuration includes the RACH resource configuration information for 4-step random access. In other words, the feature combination of the coverage enhancement does not include the RACH resource configuration information for 2-step random access.

In some implementations, the RACH configuration information for the multiple PRACH transmissions includes: RACH resource configuration information for contention based random access (CBRA) and/or RACH resource configuration information for contention free random access (CFRA).

That is, as a possible implementation, the RACH configuration information for the multiple PRACH transmissions includes: the RACH resource configuration information for the contention based random access (CBRA).

As another possible implementation, the RACH configuration information for the multiple PRACH transmissions includes: the RACH resource configuration information for the contention free random access (CFRA).

As yet another possible implementation, the RACH configuration information for the multiple PRACH transmissions includes: the RACH resource configuration information for the contention based random access (CBRA) and the RACH resource configuration information for the contention free random access (CFRA).

In some implementations, the RACH configuration information for the multiple PRACH transmissions includes at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block (SSB) indexes for the multiple PRACH transmissions.

Optionally, the RACH resource configuration information for the CFRA includes at least one of :
a RACH resource configuration for the CFRA triggered based on a physical downlink control channel (PDDCH) order;
a RACH resource configuration for the CFRA triggered based on cell handover;
a RACH resource configuration for the CFRA triggered based on addition or change of primary secondary cell (PSCell); or
a RACH resource configuration for the CFRA triggered based on beam failure recovery (BFR).

Optionally, the RACH resource configuration information for the CBRA includes at least one of :
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

Step 202, a configuration resource for the multiple PRACH transmissions is determined according to the RACH configuration information for the multiple PRACH transmissions.

In embodiments of the present application, the terminal device may determine the configuration resource for the multiple PRACH transmissions according to the RACH configuration information sent by the network device.

In some implementations, the configuration resource for the multiple PRACH transmissions is at least one of :
a RACH occasion (RO) shared with a RACH configuration resource not configured for the multiple PRACH transmissions; or
a separate RACH occasion (RO) dedicated to the multiple PRACH transmissions.

The RACH occasion (RO) shared with the RACH configuration resource not configured for the multiple PRACH transmissions refers to a RO shared by a RACH resource configured for the multiple PRACH transmissions and a RACH resource not configured for the multiple PRACH transmissions.

Optionally, in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

Optionally, in response to the configuration resource for the multiple PRACH transmissions being the separate RACH occasion (RO), the RACH configuration information for the multiple PRACH transmissions is configured to configure at least one of parameters of configuring the separate RACH occasion (RO):
prach-ConfigurationIndex;
msg1-FDM;
msg1-Frequency Start;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

It should be noted that in embodiments of the present application, the definition of the above parameters can refer to the technical specification TS 38.331 of 3GPP.

Optionally, the number of the multiple PRACH transmissions has a correspondence with the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

That is, the number of the multiple PRACH transmissions corresponding to the terminal device can be configured according to each terminal device, and different terminal devices can correspond to different numbers of transmissions; the number of the multiple PRACH transmissions corresponding to the BWP (Bandwidth Part) may be configured according to the BWP where the multiple PRACH transmissions reside, and the number of PRACH transmissions in different BWPs can be different; or the number of the multiple PRACH transmissions corresponding to the RACH configuration information may be configured according to the RACH configuration information for the multiple PRACH transmissions, and different RACH configuration information can be correspondingly configured with different numbers of PRACH transmissions.

Step 203, the multiple PRACH transmissions are performed on the configuration resource.

In embodiments of the present application, the terminal device can perform the multiple PRACH transmissions on the configuration resource determined according to the RACH configuration information for the multiple PRACH transmissions.

In some implementations, the terminal device can map the multiple PRACH transmissions to a plurality of determined configuration resources according to a certain mapping rule for transmission.

In summary, by receiving the random access channel (RACH) configuration information for the multiple PRACH transmissions sent by the network device; determining the configuration resource for the multiple PRACH transmissions according to the RACH configuration information for the multiple PRACH transmissions; and performing the multiple PRACH transmissions on the configuration resource, the terminal device can perform the multiple PRACH transmissions in an attempt for random access, improve the coverage of the physical random access channel (PRACH), effectively improve the success rate of random access of the terminal device, and improve the communication efficiency of a system.

Please refer to FIG. 3, which is a schematic flowchart of a method for resource configuration provided in an embodiment of the present application. It should be noted that the method for resource configuration of embodiments of the present application is performed by a terminal device. The method may be executed separately or in combination with any one of the other embodiments of the present application. As shown in FIG. 3, the method can include the following steps:

Step 301, RACH configuration information for multiple PRACH transmissions sent by a network device is received, and the RACH configuration information includes at least one of: a first RACH resource configuration, a second RACH resource configuration, or a third RACH resource configuration.

In embodiments of the present application, the terminal device receives the RACH configuration information for the multiple PRACH transmissions sent by the network device.

The first RACH resource configuration is suitable for a terminal device supporting a feature combination of Coverage Enhancement;
the second RACH resource configuration is suitable for a terminal device supporting other feature combinations; and
the third RACH resource configuration is suitable for a terminal device supporting no feature combination.

Other feature combinations can be at least one of: Reduced Capability (RedCap), Small Data Transmission (SDT), or Slice.

In some implementations, the configuration resource for the multiple PRACH transmissions can be at least one of:
a RACH occasion (RO) shared with a RACH configuration resource not configured for the multiple PRACH transmissions (shared RO); or
a separate RACH occasion (RO) dedicated to the multiple PRACH transmissions (separate RO).

The RACH occasion (RO) shared with the RACH configuration resource not configured for the multiple PRACH transmissions refers to a RO shared by the RACH resource configured for the multiple PRACH transmissions and the RACH resource not configured for the multiple PRACH transmissions.

Optionally, in response to the configuration resource for the multiple PRACH transmissions being the shared RO, the RACH configuration information for the multiple PRACH transmissions is configured to configure at least one of parameters of the multiple PRACH transmissions:
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

Optionally, in response to the configuration resource for the multiple PRACH transmissions being the separate RO, the RACH configuration information for the multiple PRACH transmissions is configured to configure at least one of parameters of the multiple PRACH transmissions:
prach-ConfigurationIndex;
msg1-FDM;
msg1-Frequency Start;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

It should be noted that in embodiments of the present application, the definition of the above parameters can refer to the technical specification TS 38.331 of 3GPP.

Optionally, in embodiments of the present application, the number of transmissions of the multiple PRACH transmissions may have a correspondence with the terminal device; or with the bandwidth part (BWP) where the multiple PRACH transmissions reside; or with the RACH configuration information for the multiple PRACH transmissions.

That is, the number of the multiple PRACH transmissions corresponding to the terminal device can be configured according to each terminal device, and different terminal devices can correspond to different numbers of transmissions; the number of the multiple PRACH transmissions corresponding to a bandwidth part (BWP) can be configured according to the BWP where the multiple PRACH transmissions reside, and the number of PRACH transmissions in different BWPs can be different; or the number of the multiple PRACH transmissions corresponding to the RACH configuration information can be configured according to the RACH configuration information for the multiple PRACH transmissions, and different RACH configuration information can be correspondingly configured with different numbers of PRACH transmissions.

Optionally, in embodiments of the present application, in response to the RACH configuration information for the multiple PRACH transmissions including the first RACH resource configuration, the first RACH resource configuration is configured to indicate that the first RACH resource configuration is configured for the multiple PRACH transmissions.

In one possible implementation, the first RACH resource configuration may include first indication information, and the first indication information is configured to indicate that the first RACH resource configuration is configured for the multiple PRACH transmissions.

That is, if the RACH configuration information for the multiple PRACH transmissions employs a RACH resource configuration suitable for a terminal device of coverage enhancement, the RACH resource configuration suitable for the terminal device of coverage enhancement includes indication information indicating that the RACH resource configuration is suitable for the multiple PRACH transmissions.

In another possible implementation, the first RACH resource configuration is the one configured to indicate that the first RACH resource configuration is configured for the multiple PRACH transmissions; that is, when the terminal device receives the first RACH resource configuration, it can determine that the first RACH resource is configured for the multiple PRACH transmissions at once.

As an example, a new IE can be added to the Information Element (IE) *FeatureCombinationPreambles,* the added IE is configured to indicate that the first RACH resource configuration can be configured for multiple PRACH transmissions.

As another example, if the first RACH resource configuration employs the RACH occasion (RO) dedicated to the terminal device of coverage enhancement, the first indication information can be included in the RACH-ConfigCommon in the first RACH resource configuration, to indicate that the RACH resource configuration can be used for the multiple PRACH transmissions.

Optionally, in embodiments of the present application, in response to the RACH configuration information for the multiple PRACH transmissions including the second RACH resource configuration, the feature combination indication information in the second RACH resource configuration is configured to indicate that the second RACH resource configuration is configured for the multiple PRACH transmissions.

In one possible implementation, the feature combination indication information of the second RACH resource configuration may include second indication information, and the second indication information is configured to indicate that the second RACH resource configuration is configured for the multiple PRACH transmissions.

That is, if the RACH configuration information for the multiple PRACH transmissions employs a RACH resource configuration suitable for the terminal device of other feature combinations, the RACH resource configuration suitable for the terminal device of other feature combinations includes indication information indicating that the RACH resource configuration is suitable for the multiple PRACH transmissions.

In another possible implementation, the second RACH resource configuration or the feature combination indication information of the second RACH resource configuration is the one configured to indicate that the second RACH resource configuration is configured for the multiple PRACH transmissions; that is, when the terminal device receives the second RACH resource configuration or the feature combination indication information of the second RACH resource configuration, it can determine that the second RACH resource configuration is configured for the multiple PRACH transmissions at once.

As an example, an enumerated type IE can be added to the information element *featureCombination*, and the IE can be set as an optional IE. If a value of the newly added IE is true, it indicates that the second RACH resource configuration can be configured for the multiple PRACH transmissions.

Optionally, the newly added IE encoding rule Need Code can be set to Need R. If the IE is set as an Optional IE, Need R indicates that if the IE is not carried in the second RACH resource configuration during a certain reception, the configuration of the IE will be released before the current reception.

Step 302, a configuration resource for the multiple PRACH transmissions is determined according to the RACH configuration information for the multiple PRACH transmissions.

In embodiments of the present application, the terminal device can determine the configuration resource for the multiple PRACH transmissions according to the RACH configuration information sent by the network device.

As mentioned above, in some implementations, the configuration resource for the multiple PRACH transmissions can be at least one of :
a RACH occasion (RO) shared with a RACH configuration resource not configured for the multiple PRACH transmissions (shared RO); or
a separate RACH occasion (RO) dedicated to the multiple PRACH transmissions (separate RO).

The RACH occasion (RO) shared with the RACH configuration resource not configured for the multiple PRACH transmissions refers to a RO shared by the RACH resource configured for the multiple PRACH transmissions and the RACH resource not configured for the multiple PRACH transmissions.

The terminal device can determine the configuration resource for the multiple PRACH transmissions according to the configuration parameters of the shared RO and the configuration parameters of the separate RO.

Step 303, the multiple PRACH transmissions are performed on the configuration resource.

In embodiments of the present application, the terminal device can perform the multiple PRACH transmissions on the configuration resource determined according to the RACH configuration information for the multiple PRACH transmissions.

In some implementations, the terminal device can map the multiple PRACH transmissions to a plurality of determined configuration resources according to a certain mapping rule for transmission.

In summary, by receiving the RACH configuration information for the multiple PRACH transmissions sent by the network device, the RACH configuration information including at least one of: the first RACH resource configuration, the second RACH resource configuration or the third RACH resource configuration; determining the configuration resource for the multiple PRACH transmissions according to the RACH configuration information for the multiple PRACH transmissions; and performing the multiple PRACH transmissions on the configuration resource, the terminal device can perform the multiple PRACH transmissions in an attempt for random access, improve the coverage of the physical random access channel (PRACH), effectively improve the success rate of random access of terminal device, and improve the communication efficiency of the system.

Please refer to FIG. 4, which is a schematic flowchart of a method for resource configuration provided in an embodiment of the present application. It should be noted that the method for resource configuration of embodiments of the present application is performed by a terminal device. The method may be executed separately or in combination with any one of the other embodiments of the present application. As shown in FIG. 4, the method can include the following steps.

Step 401, RACH configuration information for the multiple PRACH transmissions sent by a network device is received, and the RACH configuration information includes RACH resource configuration information for 4-step random access and/or RACH resource configuration information for 2-step random access.

In embodiments of the present application, the terminal device receives RACH configuration information for the multiple PRACH transmissions delivered by the network device.

As a possible implementation, the RACH configuration information for the multiple PRACH transmissions includes: the RACH resource configuration information for 4-step random access.

As another possible implementation, the RACH configuration information for the multiple PRACH transmissions includes: the RACH resource configuration information for 2-step random access.

As yet another possible implementation, the RACH configuration information for the multiple PRACH transmissions includes: the RACH resource configuration information for 4-step random access and the RACH resource configuration information for 2-step random access.

Optionally, in embodiments of the present application, if the RACH configuration information for the multiple PRACH transmissions includes employing a RACH resource configuration for 4-step random access (4-step RA), the RACH resource configuration for the 4-step random access may include indication information indicating that the RACH resource configuration is suitable for the multiple PRACH transmissions.

As an example, for the 4-step random access, indication information may be included in RACH-ConfigCommon, to indicate the RACH resource configuration for the multiple PRACH transmissions. The indication information can either be an explicit indicator or IE or parameter explicitly indicating that the RACH resource configuration is suitable for the multiple PRACH transmissions, or it can implicitly indicate that the RACH resource configuration is suitable for the multiple PRACH transmissions by format or other attributes.

Optionally, in embodiments of the present application, if the RACH configuration information for the multiple PRACH transmissions includes employing a RACH resource configuration for 2-step random access (2-step RA), the RACH resource configuration for the 2-step random access may also include indication information indicating that the RACH resource configuration is suitable for the multiple PRACH transmissions.

As an example, for the 2-step random access, the indication information may be included in MsgA-ConfigCommon, to indicate the RACH resource configuration for the multiple PRACH transmissions. The indication information can either be an explicit indicator or IE or parameter explicitly indicating that the RACH resource configuration is suitable for the multiple PRACH transmissions, or it can implicitly indicate that the RACH resource configuration is suitable for the multiple PRACH transmissions by format or other attributes

In some implementations, in response to the RACH configuration information for the multiple PRACH transmissions including the first RACH resource configuration, the first RACH resource configuration includes the RACH resource configuration information for 4-step random access. That is, in some implementations, the RACH resource configuration of the coverage enhancement feature combination supporting the multiple PRACH transmissions only includes the RACH resource configuration information for the 4-step random access, but does not include the RACH resource configuration information for the 2-step random access.

Step 402, a configuration resource for the multiple PRACH transmissions is determined according to the RACH configuration information configured for the multiple PRACH transmissions.

In embodiments of the present application, the terminal device can determine the configuration resource for the multiple PRACH transmissions according to the RACH configuration information sent by the network device.

Step 403, the multiple PRACH transmissions are performed on the configuration resource.

In embodiments of the present application, the terminal device can perform the multiple PRACH transmissions on the configuration resource determined according to the RACH configuration information for the multiple PRACH transmissions.

In some implementations, the terminal device can map the multiple PRACH transmissions to a plurality of determined configuration resources according to a certain mapping rule for transmission.

In summary, by receiving the RACH configuration information for the multiple PRACH transmissions sent by the receiving network device, the RACH configuration information including the RACH resource configuration information for 4-step random access and/or the RACH resource configuration information for 2-step random access; determining the configuration resource for the multiple PRACH transmissions according to the RACH configuration information for the multiple PRACH transmissions; and performing the multiple PRACH transmissions on the configuration resource, the terminal device can perform the multiple PRACH transmissions in an attempt for random access, improve the coverage of the physical random access channel (PRACH), effectively improve the success rate of random access of terminal device, and improve the communication efficiency of the system.

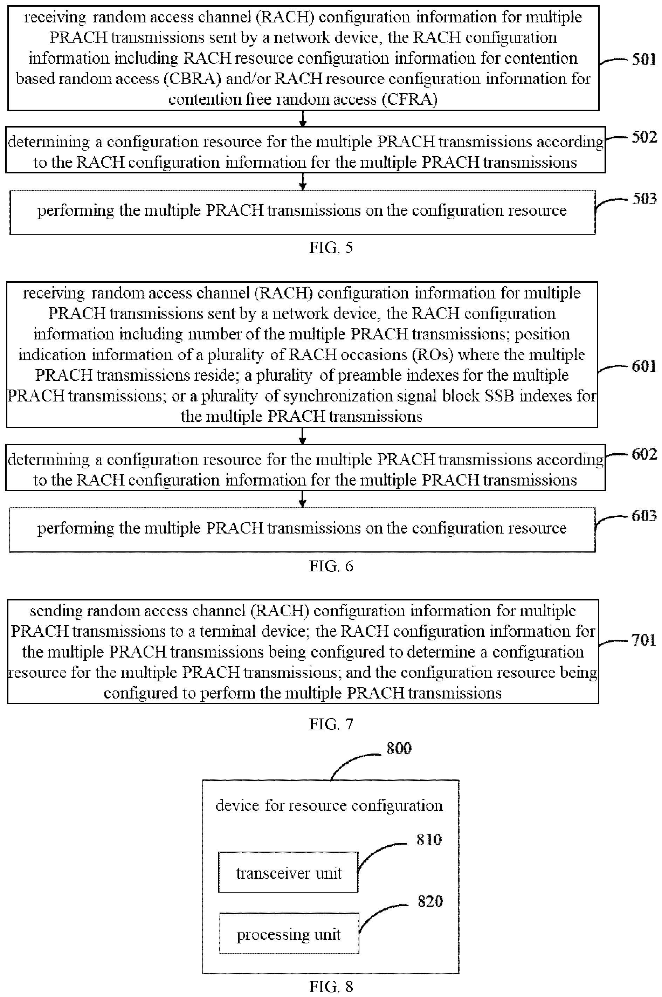

Please refer to FIG. 5, which is a schematic flowchart of a method for resource configuration provided in an embodiment of the present application. It should be noted that the method for resource configuration of embodiments of the present application is performed by a terminal device. The method may be executed separately or in combination with any one of the other embodiments of the present application. As shown in FIG. 5, the method can include the following steps:

Step 501, RACH configuration information for the multiple PRACH transmissions sent by a network device is received, the RACH configuration information includes RACH resource configuration information for the contention based random access (CBRA) and/or RACH resource configuration information for the contention free random access (CFRA).

In embodiments of the present application, the terminal device receives the RACH configuration information for the multiple PRACH transmissions delivered by the network device.

As a possible implementation, the RACH configuration information for the multiple PRACH transmissions includes: the RACH resource configuration information for the contention based random access (CBRA).

As another possible implementation, the RACH configuration information for the multiple PRACH transmissions includes: the RACH resource configuration information for contention free random access (CFRA).

As yet another possible implementation, the RACH configuration information for the multiple PRACH transmissions includes: the RACH resource configuration information for the contention based random access (CBRA) and the RACH resource configuration information for the contention free random access (CFRA).

Optionally, the RACH resource configuration information for the CFRA includes at least one of :
a RACH resource configuration for the CFRA triggered based on a physical downlink control channel (PDDCH) order;
a RACH resource configuration for the CFRA triggered based on cell handover;
a RACH resource configuration for the CFRA triggered based on addition or change of primary secondary cell; or
a RACH resource configuration for the CFRA triggered based on beam failure recovery (BFR).

Optionally, for the RACH resource configuration information for the CFRA including the RACH resource configuration for the CFRA triggered based on the physical downlink control channel (PDDCH) order, as an example, the RACH resource configuration for the CFRA supporting the multiple PRACH transmissions can be carried in the PDCCHorder, or the RACH resource configuration for the CFRA supporting the multiple PRACH transmissions can be carried in RACH-ConfigCommon.

Optionally, for the RACH resource configuration information for the CFRA including the RACH resource configuration for the CFRA triggered based on cell handover, or for the RACH resource configuration information for the CFRA including the RACH resource configuration for the CFRA triggered based on addition or change of the primary and secondary cells, as an example, the RACH resource configuration for the CFRA can be a RO shared with the RACH resource configuration for the CFRA supporting a single PRACH transmission (not supporting the multiple PRACH transmissions), or it can also be a separate RO dedicated to the RACH resource configuration for the CFRA supporting the multiple PRACH transmissions.

As another example, the RACH resource configuration for the CFRA can also reuse the RACH resource configuration for the CFRA supporting the single PRACH transmission (not supporting the multiple PRACH transmissions).

As yet another example, the RACH resource configuration for the CFRA supporting the multiple PRACH transmissions may be carried in the information element *cfra*; or the RACH resource configuration for the CFRA supporting the multiple PRACH transmissions may be carried in the information element *cfra-TwoStep*; or the RACH resource configuration for the CFRA supporting the multiple PRACH transmissions may be carried in both the information element *cfra* and the information element *cfra-TwoStep.*

As yet another example, optionally, the CFRA can be a CFRA supporting only 4-step random access. For the CFRA supporting only 4-step random access, the configuration in *cfra-TwoStep* is not included in the configuration for the CFRA supporting the multiple PRACH transmissions. The RACH resource configuration for the CFRA supporting the multiple PRACH transmissions is carried in the *cfra.*

Optionally, for the RACH resource configuration information for the CFRA including the RACH resource configuration for the CFRA triggered based on the beam failure recovery (BFR), as an example, the RACH resource configuration for the CFRA can be an RO shared with the RACH resource configuration for the CFRA supporting a single PRACH transmission (not supporting the multiple PRACH transmissions), or a separate RO dedicated to the RACH resource configuration for the CFRA supporting the multiple PRACH transmissions.

As an example, the configuration for the CFRA supporting the multiple PRACH transmissions can include at least one of parameters:
rootSequenceIndex-BFR;
preambleReceivedTargetPower;
powerRampingStep;
preambleTransMax;
ra-ResponseWindow;
candidateBeamRSList;
rsrp-ThresholdSSB;
ssb-perRACH occasion;
ra-ssb-OccasionMaskIndex;
recoverySearchSpaceId;
ra-Prioritization; or
msg1-SubcarrierSpacing.

It should be noted that in embodiments of the present application, the definition of the above parameters can refer to the technical specification TS 38.331 of 3GPP.

As another example, the RACH resource configuration for the CFRA can also reuse the RACH configuration for the CFRA supporting the single PRACH transmission (not supporting the multiple PRACH transmissions).

As yet another example, the primary cell and the secondary cell can be configured separately with the RACH resource configuration for the CFRA, that is, the configuration of the primary cell *BeamFailureRecoveryConfig* carries the RACH resource configuration for the CFRA supporting the multiple PRACH transmissions, and the configuration of the secondary cell *BeamFailureRecoverySCellConfig* also carries the RACH resource configuration for the CFRA supporting the multiple PRACH transmissions. The RACH resource configuration for the CFRA for the primary cell and the secondary cell can be the same or different.

Optionally, the RACH resource configuration information for the CBRA includes at least one of :
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

Optionally, for the RACH resource configuration information for the CBRA including the RACH resource configuration for the CBRA triggered based on the beam failure recovery (BFR), as an example, the configuration for the CBRA supporting the multiple PRACH transmissions can include at least one of parameters:
preambleReceivedTargetPower;
powerRampingStep;
preambleTransMax;
ra-ResponseWindow;
ra-Prioritization;
ra-PrioritizationTwoStep; or
msg1-SubcarrierSpacing.

It should be noted that in embodiments of the present application, the definition of the above parameters can refer to the technical specification TS 38.331 of 3GPP.

Optionally, for the RACH resource configuration information for the CBRA including the RACH resource configuration for the CBRA triggered based on cell handover, or, for the RACH resource configuration information for the CBRA including the RACH resource configuration for the CBRA triggered based on addition or change of primary secondary cell, as an example, the configuration for the CBRA supporting the multiple PRACH transmissions may include at least one of parameters:
preambleReceivedTargetPower;
powerRampingStep;
preambleTransMax;
ra-ResponseWindow;
ra-Prioritization;
ra-PrioritizationTwoStep; or
msg1-SubcarrierSpacing.

It should be noted that in embodiments of the present application, the definition of the above parameters can refer to the technical specification TS 38.331 of 3GPP.

Step 502, the configuration resource for the multiple PRACH transmissions is determined according to the RACH configuration information for the multiple PRACH transmissions.

In embodiments of the present application, the terminal device can determine the configuration resource for the multiple PRACH transmissions according to the RACH configuration information sent by the network device.

Step 503, the multiple PRACH transmissions are performed on the configuration resource.

In embodiments of the present application, the terminal device can perform the multiple PRACH transmissions on the configuration resource determined according to the RACH configuration information for the multiple PRACH transmissions.

In some implementations, the terminal device can map the multiple PRACH transmissions to a plurality of determined configuration resources according to a certain mapping rule for transmission.

In summary, by receiving the RACH configuration information for the multiple PRACH transmissions sent by the network device, the RACH configuration information including the RACH resource configuration information for the contention based random access (CBRA) and/or the RACH resource configuration information for the contention free random access (CFRA); determining the configuration resource for the multiple PRACH transmissions according to the RACH configuration information for the multiple PRACH transmissions; and performing the multiple PRACH transmissions on the configuration resource, the terminal device can perform the multiple PRACH transmissions in an attempt for random access, improve the coverage of the physical random access channel (PRACH), effectively improve the success rate of random access of the terminal device, and improve communication efficiency of the system.

Please refer to FIG. 6, which is a schematic flowchart of a method for resource configuration provided in embodiments of the present application. It should be noted that the method for resource configuration of embodiments of the present application is performed by a terminal device. The method may be executed separately or in combination with any one of the other embodiments of the present application. As shown in FIG. 6, the method can include steps:

Step 601, RACH configuration information for multiple PRACH transmissions sent by a network device is received, the RACH configuration information includes at least one of indication information: number of the multiple PRACH transmissions, position indication information of a plurality of plurality of RACH occasions (ROs) where the multiple PRACH transmissions reside, a plurality of preamble indexes for the multiple PRACH transmissions, or the synchronization signal block (SSB) indexes for the multiple PRACH transmissions.

In embodiments of the present application, the RACH configuration information for the multiple PRACH transmissions further includes at least one of indication information: number of the multiple PRACH transmissions, position indication information of a plurality of RACH occasions (ROs) where the multiple PRACH transmissions reside, a plurality of preamble indexes for the multiple PRACH transmissions, or the plurality of synchronous signal block (SSB) indexes for the multiple PRACH transmissions.

The terminal device can, according to at least one indication information, determine the resource configured for the multiple PRACH transmissions, as well as a plurality of preambles transmitted on PRACH, and/or, a plurality of SSBs transmitted on the PRACH.

In some implementations, the position indication information of a plurality of RACH occasions (ROs) where the multiple PRACH transmissions reside may indicate at least one of :
a starting RO in the plurality of ROs and the number of the plurality of ROs; the position of each RO in the plurality of ROs; or the number of the plurality of ROs.

As a possible implementation, position indication information of the plurality of ROs can indicate the starting RO in the plurality of ROs, and the number of the plurality of ROs.

As an example, for SSB-mapped ROs, the starting RO in the plurality of ROs can be indicated with the PRACH Mask Index. It should be noted that a value of the PRACH Mask Index should only represent a position of one RO (for example, the values of the PRACH Mask Index 1~8 represent RO#1-RO#8, respectively).

As another example, for CSI-RS mapped ROs, the starting RO in the plurality of ROs can be indicated with ra-OccasionList, and the index of the starting RO may be carried in the ra-OccasionList.

As another possible implementation, the position indication information of the plurality of ROs can also indicate the position of each RO in the plurality of ROs.

As an example, for SSB-mapped ROs, the position of each RO can be indicated separately with one PRACH Mask Index. It should be noted that, similarly, a value of PRACH Mask Index should only represent the position of one RO (for example, the values of PRACH Mask Index 1~8 represents RO#1-RO#8, respectively).

As another example, for CSI-RS mapped ROs, the position of each RO in the plurality of ROs may be indicated with ra-OccasionList, and the ra-OccasionList carries the index of each RO in the plurality of ROs.

As another possible implementation, the position indication information of the plurality of ROs can also indicate the number of the plurality of ROs.

As an example, for SSB mapped ROs, the position of each RO in the plurality of ROs can be indicated by the PRACH Mask Index, for example, when PRACH Mask Index = 0, all ROs are available, when PRACH Mask index = 9, ROs with even indexes are available, and when PRACH Mask index = 10, ROs with odd indexes are available. The terminal device can select X (X is a positive integer) ROs from these available ROs to send PRACH. The value of X depends on a mapping rule of M and N. The positions of X ROs can be the first X or the last X of the plurality of available ROs, or X in the plurality of available ROs equally spaced apart, etc., and there is no restriction here.

As another example, for CSI-RS mapped ROs, the position of each RO in the plurality of ROs can be indicated by ra-OccasionList, and ra-OccasionList carries the index of each RO in the plurality of ROs. The terminal device can select X (X is a positive integer) ROs from the plurality of ROs indicated in the ra-OccasionList to send PRACH. The value of X depends on a mapping rule of M and N. The positions of X ROs can be the first X or the last X of the plurality of available ROs, or X in the plurality of available ROs equally spaced apart, etc., and there is no restriction here.

It should be noted that in the above examples, the mapping rule for M and N refers to:
a mapping rule between the plurality of preamble index digits M of the multiple PRACH transmissions and the number N of the multiple PRACH transmissions; or
a mapping rule between the plurality of SSB index digits M of the multiple PRACH transmissions and the number N of the multiple PRACH transmissions; or
a mapping rule between the number of the multiple PRACH transmissions and the number N of positions of the plurality of ROs.

It should be noted that M and N are positive integers.

In embodiments of the present application, as an example, the terminal device maps M preamble indexes to N PRACH transmissions according to a certain rule, and the mapping rule between M and N is the mapping rule between the plurality of preamble index digits M of the multiple PRACH transmissions and the number N of the multiple PRACH transmissions. The mapping rule can be a 1:1 mapping, a 1:N mapping, or any other mapping rule.

In embodiments of the present application, as an example, the terminal device maps M SSB indexes to N PRACH transmissions according to a certain rule, and the mapping rule between M and N is the mapping rule between the plurality of SSB index digits M of the multiple PRACH transmissions and the number N of the multiple PRACH transmissions. The mapping rule can be a 1:1 mapping, a 1:N mapping, or any other mapping rule.

In embodiments of the present application, as an example, the terminal device maps M PRACH transmissions to N ROs according to a certain mapping rule, and the mapping rule between M and N is the mapping rule between the number of the multiple PRACH transmissions and the number N of positions of the plurality of ROs. The mapping rule can be a 1:1 mapping, a 1:N mapping, or any other mapping rule.

Step 602, the configuration resource for the multiple PRACH transmissions is determined according to the RACH configuration information for the multiple PRACH transmissions.

In embodiments of the present application, the terminal device can determine the configuration resource for the multiple PRACH transmissions according to the RACH configuration information sent by the network device.

Step 603, the multiple PRACH transmissions are performed on the configuration resource.

In embodiments of the present application, the terminal device can perform the multiple PRACH transmissions on the configuration resource determined according to the RACH configuration information for the multiple PRACH transmissions.

In some implementations, as described above, the terminal device can map the multiple PRACH transmissions to a plurality of determined configuration resources according to a certain mapping rule for transmission.

In summary, by receiving the RACH configuration information for the multiple PRACH transmissions sent by the network device, the RACH configuration information including at least one of indication information: number of the multiple PRACH transmissions, position indication information of a plurality of RACH occasions (ROs) where the multiple PRACH transmissions reside, a plurality of preamble indexes for the multiple PRACH transmissions, a plurality of synchronization signal block (SSB) indexes for the multiple PRACH transmissions; determining a configuration resource for the multiple PRACH transmissions according to the RACH configuration information for the multiple PRACH transmissions; and performing the multiple PRACH transmissions on the configuration resource, the terminal device can perform the multiple PRACH transmissions in an attempt for random access, improve the coverage of the physical random access channel (PRACH), effectively improve the success rate of random access of the terminal device, and improve communication efficiency of the system.

Please refer to FIG. 7, which is a schematic flowchart of a method for resource configuration provided in an embodiment of the present application. It should be noted that the method for resource configuration of embodiments of the present application is performed by a network device. The method may be executed separately or in combination with any one of the other embodiments of the present application. As shown in FIG. 7, the method can include the following steps:

Step 701, random access channel (RACH) configuration information for multiple PRACH transmissions is sent to a terminal device, the RACH configuration information for the multiple PRACH transmissions is configured to determine a configuration resource for the multiple PRACH transmissions, and the configuration resource is configured to perform the multiple PRACH transmissions.

In embodiments of the present application, a network device can send the RACH configuration information for the multiple PRACH transmissions to a terminal device, and the RACH configuration information for the multiple PRACH transmissions is configured for the terminal device to perform the multiple PRACH transmissions.

In some implementations, the RACH configuration information for the multiple PRACH transmissions includes at least one of :
a first RACH resource configuration, in which the first RACH resource configuration is suitable for a terminal device supporting a feature combination for coverage enhancement;
a second RACH resource configuration, in which the second RACH resource configuration is suitable for a terminal device supporting other feature combinations; or
a third RACH resource configuration, in which the third RACH resource configuration is suitable for a terminal device supporting no feature combination.

Optionally, in response to the RACH configuration information for the multiple PRACH transmissions including the first RACH resource configuration, the first RACH resource configuration is configured to indicate that the first RACH resource configuration is configured for the multiple PRACH transmissions.

In one possible implementation, the first RACH resource configuration may include first indication information, and the first indication information indicates that the first RACH resource configuration is configured for the multiple PRACH transmissions. In another possible implementation, the first RACH resource configuration is the one configured to indicate that the first RACH resource configuration is configured for the multiple PRACH transmissions; that is, when the terminal device receives the first RACH resource configuration, it can determine that the first RACH resource configuration is configured for the multiple PRACH transmissions at once.

Optionally, in response to the RACH configuration information for the multiple PRACH transmissions including the second RACH resource configuration, the feature combination indication information in the second RACH configuration is configured to indicate that the second RACH resource configuration is configured for the multiple PRACH transmissions.

In one possible implementation, the first RACH resource configuration may include first indication information that indicates that the first RACH resource configuration is configured for the multiple PRACH transmissions. In another possible implementation, the second RACH resource configuration or the feature combination indication information of the second RACH resource configuration is the one configured to indicate that the second RACH resource configuration is configured for the multiple PRACH transmissions; that is, when the terminal device receives the second RACH resource configuration or the feature combination indication information of the second RACH resource configuration, it can determine that the second RACH resource configuration is configured for the multiple PRACH transmissions at once.

In some implementations, the RACH configuration information for the multiple PRACH transmissions includes: RACH resource configuration information for 4-step random access and/or RACH resource configuration information for 2-step random access.

That is, as a possible implementation, the RACH configuration information for the multiple PRACH transmissions includes: the RACH resource configuration information for 4-step random access.

As another possible implementation, the RACH configuration information for the multiple PRACH transmissions includes: the RACH resource configuration information for 2-step random access.

As yet another possible implementation, the RACH configuration information for the multiple PRACH transmissions includes: the RACH resource configuration information for 4-step random access and the RACH resource configuration information for 2-step random access.

Optionally, in response to the RACH configuration information for the multiple PRACH transmissions including the first RACH resource configuration, the first RACH resource configuration includes the RACH resource configuration information for 4-step random access. In other words, the feature combination of the coverage enhancement does not include the RACH resource configuration information for 2-step random access.

In some implementations, the RACH configuration information for the multiple PRACH transmissions includes: RACH resource configuration information for the contention based random access (CBRA) and/or RACH resource configuration information for the contention free random access (CFRA).

That is, as a possible implementation, the RACH configuration information for the multiple PRACH transmissions includes: the RACH resource configuration information for the contention based random access (CBRA).

As another possible implementation, the RACH configuration information for the multiple PRACH transmissions includes: the RACH resource configuration information for the contention free random access (CFRA).

As yet another possible implementation, the RACH configuration information for the multiple PRACH transmissions includes: the RACH resource configuration information for the contention based random access (CBRA) and the RACH resource configuration information for the contention free random access (CFRA).

In some implementations, the RACH configuration information for the multiple PRACH transmissions includes at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block (SSB) indexes for the multiple PRACH transmissions.

Optionally, the RACH resource configuration information for the CFRA includes at least one of :
a RACH resource configuration for the CFRA triggered based on a physical downlink control channel (PDDCH) order;
a RACH resource configuration for the CFRA triggered based on cell handover;
a RACH resource configuration for the CFRA triggered based on addition or change of primary secondary cell; or
a RACH resource configuration for the CFRA triggered based on beam failure recovery (BFR).

Optionally, the RACH resource configuration information for the CBRA includes at least one of :
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

In embodiments of the present application, the RACH configuration information sent by the network device can determine the configuration resource for the multiple PRACH transmissions.

In some implementations, the configuration resource for the multiple PRACH transmissions is at least one of :
a RACH occasion (RO) shared with a RACH configuration resource not configured for the multiple PRACH transmissions; or
a separate RACH occasion (RO) dedicated to the multiple PRACH transmissions.

The RACH occasion (RO) shared with the RACH configuration resource not configured for the multiple PRACH transmissions refers to an RO shared by the RACH resource configured for the multiple PRACH transmissions and the RACH resource not configured for the multiple PRACH transmissions.

Optionally, in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

Optionally, in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-Frequency Start;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

It should be noted that in embodiments of the present application, the definition of the above parameters can refer to the technical specification TS 38.331 of 3GPP.

Optionally, the number of the multiple PRACH transmissions has a correspondence with the terminal device; or
the number of the multiple PRACH transmissions has a correspondence with the bandwidth part where the multiple PRACH transmissions reside; or
the number of the multiple PRACH transmissions has a correspondence with the RACH configuration information for the multiple PRACH transmissions.

That is, the number of the multiple PRACH transmissions corresponding to the terminal device can be configured according to each terminal device, and different terminal devices can correspond to different numbers of transmissions; the number of the multiple PRACH transmissions corresponding to a bandwidth part (BWP) where the multiple PRACH transmissions reside may be configured according to the BWP, and the number of PRACH transmissions in different BWPs can be different; or the number of the multiple PRACH transmissions corresponding to the RACH configuration information may be configured according to the RACH configuration information for the multiple PRACH transmissions, and different RACH configuration information can be correspondingly configured with different numbers of PRACH transmissions.

In embodiments of the present application, the configuration resource determined by the RACH configuration information for the multiple PRACH transmissions can be configured to perform the multiple PRACH transmissions.

In some implementations, the terminal device can map the multiple PRACH transmissions to a plurality of determined configuration resources according to a certain mapping rule for transmission.

In summary, by sending random access channel (RACH) configuration information for the multiple PRACH transmissions to the terminal device, the RACH configuration information for the multiple PRACH transmissions being configured to determine the configuration resource for the multiple PRACH transmissions, and the configuration resource being configured to perform the multiple PRACH transmissions, the terminal device can perform the multiple PRACH transmissions in an attempt for random access, improve the coverage of the physical random access channel (PRACH), effectively improve the success rate of random access of the terminal device, and improve the communication efficiency of the system.

Corresponding to the method for resource configuration provided by the above embodiments, the present application also provides a device for resource configuration, and because the device for resource configuration provided in embodiments of the present application has a correspondence with the method provided by the above embodiments, embodiments of the method for resource configuration is also suitable for the device for resource configuration provided in the following embodiments, and is no longer described in detail in the following embodiments.

Please refer to FIG. 8, which is a structural schematic diagram of a device for resource configuration provided in an embodiment of the present application.

As shown in FIG. 8, the device for resource configuration 800 includes: a transceiver unit 810 and a processing unit 820, in which:
the transceiver unit 810 is configured to receive random access channel (RACH) configuration information for the multiple PRACH transmissions sent by a network device;
the processing unit 820 is configured to determine a configuration resource for the multiple PRACH transmissions according to the RACH configuration information for the multiple PRACH transmissions; and
the transceiver unit 810 is also configured to perform the multiple PRACH transmissions on the configuration resource.

Optionally, the RACH configuration information for the multiple PRACH transmissions includes at least one of :
a first RACH resource configuration, in which the first RACH resource configuration is suitable for a terminal device supporting a feature combination for coverage enhancement;
a second RACH resource configuration, in which the second RACH resource configuration is suitable for a terminal device supporting other feature combinations; or
a third RACH resource configuration, in which the third RACH resource configuration is suitable for a terminal device supporting no feature combination.

Optionally, the configuration resources for the multiple PRACH transmissions is at least one of :
a RACH occasion (RO) shared with RACH configuration resource not configured for the multiple PRACH transmissions; or
a separate RACH occasion (RO) dedicated to the multiple PRACH transmissions.

Optionally, in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

Optionally, in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-FrequencyStart;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

Optionally, the number of the multiple PRACH transmissions has a correspondence with the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

Optionally, in response to the RACH configuration information for the multiple PRACH transmissions including the first RACH resource configuration, the first RACH resource configuration includes first indication information, and the first indication information is configured to indicate that the first RACH resource configuration is configured for the multiple PRACH transmissions.

Optionally, in response to the RACH configuration information for the multiple PRACH transmissions including the second RACH resource configuration, the feature combination indication information in the second RACH configuration includes second indication information, and the second indication information indicates that the second RACH resource configuration is configured for the multiple PRACH transmissions.

Optionally, the RACH configuration information for the multiple PRACH transmissions includes: RACH resource configuration information for 4-step random access and/or RACH resource configuration information for 2-step random access.

Optionally, in response to the RACH configuration information for the multiple PRACH transmissions including the first RACH resource configuration, the first RACH resource configuration includes the RACH resource configuration information for 4-step random access.

Optionally, the RACH configuration information for the multiple PRACH transmissions includes: RACH resource configuration information for the contention based random access (CBRA) and/or RACH resource configuration information for contention free random access (CFRA).

Optionally, the RACH configuration information for the multiple PRACH transmissions includes at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block (SSB) indexes for the multiple PRACH transmissions.

Optionally, the RACH resource configuration information for the CFRA includes at least one of :
a RACH resource configuration for the CFRA triggered based on a physical downlink control channel (PDDCH) order;
a RACH resource configuration for the CFRA triggered based on cell handover;
a RACH resource configuration for the CFRA triggered based on addition or change of primary secondary cell; or
a RACH resource configuration for the CFRA triggered based on beam failure recovery (BFR).

Optionally, the RACH resource configuration information for the CBRA includes at least one of :
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

The device for resource configuration of the present embodiment can receive the random access channel (RACH) configuration information for the multiple PRACH transmissions sent by the network device, determine the configuration resource for the multiple PRACH transmissions according to the RACH configuration information for the multiple PRACH transmissions, and perform the multiple PRACH transmissions on the configuration resource, so that the terminal device can perform the multiple PRACH transmissions in an attempt for random access, improve the coverage of the physical random access channel (PRACH), effectively improve the success rate of random access of terminal device, and improve the communication efficiency of the system.

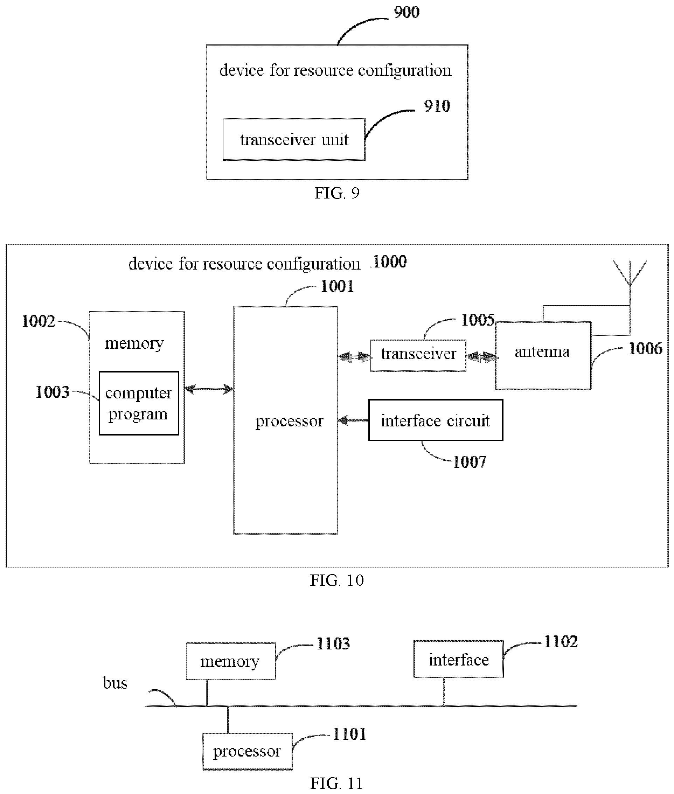

Please refer to FIG. 9, which is a structural schematic diagram of a device for resource configuration provided in an embodiment of the present application.

As shown in FIG. 9, this device for resource configuration 900 includes: a transceiver unit 910, in which:
the transceiver unit 910 is configured to send random access channel (RACH) configuration information for the multiple PRACH transmissions to the terminal device;
the RACH configuration information for the multiple PRACH transmissions is configured to determine the configuration resource for the multiple PRACH transmissions; or
the configuration resource is configured to perform the multiple PRACH transmissions.

Optionally, the RACH configuration information for the multiple PRACH transmissions includes at least one of :
a first RACH resource configuration, in which the first RACH resource configuration is suitable for a terminal device supporting a feature combination for coverage enhancement;
a second RACH resource configuration, in which the second RACH resource configuration is suitable for a terminal device supporting other feature combinations; or
a third RACH resource configuration, in which the third RACH resource configuration is suitable for a terminal device supporting no feature combination.

Optionally, the configuration resource for the multiple PRACH transmissions is at least one of :
a RACH occasion (RO) shared with a RACH configuration resource not configured for the multiple PRACH transmissions; or
a separate RACH occasion (RO) dedicated to the multiple PRACH transmissions.

Optionally, in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

Optionally, in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-FrequencyStart;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootS equenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

Optionally, the number of the multiple PRACH transmissions has a correspondence with the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

Optionally, in response to the RACH configuration information for the multiple PRACH transmissions includes the first RACH resource configuration, the first RACH resource configuration includes first indication information, and the first indication information is configured to indicate that the first RACH resource configuration is configured for the multiple PRACH transmissions.

Optionally, in response to the RACH configuration information for the multiple PRACH transmissions includes the second RACH resource configuration, the feature combination indication information in the second RACH resource configuration includes second indication information, and the second indication information indicates that the second RACH resource configuration is configured for the multiple PRACH transmissions.

Optionally, the RACH configuration information for the multiple PRACH transmissions includes: RACH resource configuration information for 4-step random access and/or RACH resource configuration information for 2-step random access.

Optionally, in response to the RACH configuration information for the multiple PRACH transmissions including the first RACH resource configuration, the first RACH resource configuration includes the RACH resource configuration information for 4-step random access.

Optionally, the RACH configuration information for the multiple PRACH transmissions includes: RACH resource configuration information for the contention based random access (CBRA) and/or RACH resource configuration information for the contention free random access (CFRA).

Optionally, the RACH configuration information for the multiple PRACH transmissions includes at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block (SSB) indexes for the multiple PRACH transmissions.

Optionally, the RACH resource configuration information for the CFRA includes at least one of :
a RACH resource configuration for the CFRA triggered based on a physical downlink control channel (PDDCH) order;
a RACH resource configuration for the CFRA triggered based on cell handover;
a RACH resource configuration for the CFRA triggered based on addition or change of primary secondary cell; or
a RACH resource configuration for the CFRA triggered based on beam failure recovery (BFR).

Optionally, the RACH resource configuration information for the CBRA includes at least one of :
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

The device for resource configuration of the present embodiment may send the random access channel (RACH) configuration information for the multiple PRACH transmissions to a terminal device, the RACH configuration information for the multiple PRACH transmissions is configured to determine the configuration resource for the multiple PRACH transmissions, and the configuration resource is configured to perform the multiple PRACH transmissions, so that the terminal device can perform the multiple PRACH transmissions in an attempt for random access, improve the coverage of the physical random access channel (PRACH), effectively improve the success rate of random access of terminal device, and improves the communication efficiency of the system.

In order to realize the above embodiments, embodiments of the present application also provide a communication device including: a processor and a memory. A computer program is stored on the memory, and the processor executes the computer program stored on the memory, to cause the device to perform the method shown in embodiments from FIG. 2 to FIG. 6.

In order to realize the above embodiments, embodiments of the present application further provide a communication device including: a processor and a memory. A computer program is stored on the memory, and the processor executes the computer program stored on the memory, to cause the device to perform the method shown in embodiment in FIG. 7.

In order to realize the above embodiments, embodiments of the present application further provide a communication device including: a processor and an interface circuit. The interface circuit is configured to receive code instructions and transmit them to the processor, and the processor is configured to run the code instructions to perform the method shown in embodiments from FIG. 2 to FIG. 6.

In order to realize the above embodiments, embodiments of the present application further provide a communication device including: a processor and an interface circuit. The interface circuit is configured to receive code instructions and transmit them to the processor, and the processor is configured to run the code instructions to perform the method shown in embodiment of FIG. 7.

Please refer to FIG. 10, which is a structural schematic diagram of another device for resource configuration provided in an embodiment of the present application. The device for resource configuration 1000 can be a network device, can also be a terminal device, can also be a chip, a system-on-chip, or a processor supporting the network device to realize the above-mentioned method, and can also be a chip, a system-on-chip, or a processor supporting the terminal device to realize the above-mentioned method. The device can be configured to realize the method described in the above method embodiments, and can specifically refer to the description in the above method embodiments.

The device for resource configuration 1000 may include one or more processors 1001. The processor 1001 can be a general-purpose processor or a specialized processor. For example, it can be a baseband processor or a central processing unit. The baseband processor can be configured to process the communication protocol and communication data, and the central processing unit can be configured to control the device for resource configuration (such as the base station, the baseband chip, the terminal device, the terminal device chip, the DU or CU, etc.), execute the computer program, and process the data of the computer program.

Optionally, the device for resource configuration 1000 may also include one or more memory 1002, a computer program 1003 may be stored thereon, and the processor 1001 executes the computer program 1003 so that the device for resource configuration 1000 can perform the method described in the method embodiments. The computer program 1003 may be solidified in the processor 1001, in which case the processor 1001 may be implemented by hardware.

Optionally, data can also be stored on the memory 1002. The device for resource configuration 1000 and the memory 1002 can be set up separately or integrated.

Optionally, the device for resource configuration 1000 may also include a transceiver 1005, an antenna 1006. The transceiver 1005 can be called a transceiver unit, a transceiver, or a transceiver circuit, etc., and is configured to realize the transmitting and receiving function. The transceiver 1005 may include a receiver and a transmitter, and the receiver may be called a receiver or a receiving circuit, etc., and is configured to realize the receiving function; and the transmitter can be called a transmitter or a transmitting circuit, etc., and is configured to realize the transmitting function.

Optionally, one or more interface circuits 1007 may also be included in the device for resource configuration 1000. The interface circuit 1007 is configured to receive code instructions and transmit them to the processor 1001. The processor 1001 runs the code indications to cause the device for resource configuration 1000 to execute the method described in the above method embodiments.

In one implementation, the processor 1001 may include transceivers configured to realize receiving and transmitting functions. For example, the transceiver can be a transceiver circuit, or an interface, or an interface circuit. The transceiver circuit, the interface, or the interface circuit configured to realize receiving and transmitting functions can be separate or integrated. The transceiver circuit, the interface, or the interface circuit may be configured for reading and writing code/data, or the transceiver circuit, the interface, or the interface circuit may be configured for the transmission or transfer of signals.

In an embodiment, the device for resource configuration 1000 may include a circuit, and the circuit can realize the function of sending or receiving or communicating in the above method embodiments. The processors and transceivers described in the present application can be implemented in integrated circuits (ICs), analog ICs, radio frequency integrated circuits (RFICs), mixed-signal ICs, application-specific integrated circuits (ASICs), printed circuit boards (PCBs), electronic devices, etc. The processor and transceiver can also be fabricated using a variety of IC process technologies, such as complementary metal oxide semiconductor (CMOS), nMetal-oxide-semiconductor (NMOS), and positive channel metal oxide semiconductor (PMOS), bipolar junction transistor (BJT), bipolar CMOS (BiCMOS), silicon germanium (SiGe), gallium arsenide (GaAs), etc.

The device for resource configuration described in the above embodiments may be a network device or a terminal device, but the scope of the device for resource configuration described in the present application is not limited to this, and the structure of the device for resource configuration may not be limited by FIG. 8-FIG. 9. The device for resource configuration can be a stand-alone device or part of a larger device. For example, the device for resource configuration could be:
(1) a stand-alone integrated circuit IC, or chip, or, system-on-chip or subsystem;
(2) a collection with one or more ICs, optionally, the IC collection may also include storage parts configured to store data, computer programs;
(3) ASICs, such as modems;
(4) a module that can be embedded in other devices;
(5) a receivers, terminal device, intelligent terminal device, cellular phone, wireless device, handset, mobile unit, vehicle equipment, network device, cloud equipment, artificial intelligence equipment, etc.;
(6) Others, etc.

For cases where the device for resource configuration can be a chip or a system-on-chip, see the schematic diagram of the chip structure shown in FIG. 11. The chip shown in FIG. 11 includes a processor 1101 and an interface 1102. The number of processors 1101 can be one or more, and the number of interfaces 1102 can be multiple.

For the case where the chip is configured to realize the functions of the network device in embodiments of the present application:
The interface 1102 is configured for code indications and transmission to the processor; and
the processor 1101 is configured to run code instructions to execute the methods shown in Figures 2 to 6.

For the case where the chip is configured to realize the function of the terminal device in embodiments of the present application:
the interface 1102 is configured for code indications and transmission to the processor; and
the processor 1101 is configured to run code instructions to execute the method as shown in FIG. 7.

Optionally, the chip also includes a memory 1103, and the memory 1103 is configured to store the necessary computer programs and data.

A person skilled in the art may also understand that the various illustrative logical blocks and steps listed in the embodiments of the present application may be realized by electronic hardware, computer software, or a combination of both. Whether this is achieved in hardware or software depends on the specific application and the design requirements of the system as a whole. A person skilled in the art may use various methods to implement functions for each particular application, but such implementation shall not be construed as going beyond the scope of protection of the embodiments of the present application.

Embodiments of the present application also provide a communication system, which includes a device for resource configuration as a terminal device and a device for resource configuration as a network device in the above FIGS. 8-9 embodiments, or the system includes a device for resource configuration as a terminal device and a device for resource configuration as a network device in the above FIG. 10 embodiment.

The present application also provides a readable storage medium on which instructions are stored to realize the functions of any of the above method embodiments when executed by a computer.

The present application also provides a computer program product that, when executed by a computer, realizes the functions of any of the above method embodiments.

In the above embodiment, it may be implemented in whole or in part by software, hardware, firmware, or any combination thereof. When implemented using software, it can be implemented in whole or in part in the form of a computer program product. A computer program product includes one or more computer programs. When a computer program is loaded and executed on a computer, a process or function in whole or in part is produced in accordance with embodiments of the present application. A computer can be a general-purpose computer, a specialized computer, a computer network, or other programmable device. Computer programs may be stored in or transmitted from one computer-readable storage medium to another, for example, a computer program may be delivered from a website site, computer, server, or data center to another website site, computer, server, or data center by wire (e.g., coaxial cable, optical fiber, digital subscriber line, DSL)) or wireless (e.g., infrared, wireless, microwave, etc.) for transmission. A computer-readable storage medium can be any usable media that a computer can access, or a server, data center, or other data storage device that contains one or more usable media integrations. The usable media can be magnetic (e.g., floppy disks, hard disks, tapes), optical (e.g., high-density digital video discs (DVDs)), or semiconductor media (e.g., solid state disks (SSDs)).

A person skilled in the art may understand that the first and second numerical numbers involved in the present application are only for the convenience of description, and are not configured to limit the scope of the embodiments of the present application, and also indicate the order.

At least one of the present application may also be described as one or more, and plurality may be two, three, four, or more, without limitation in the present application. In embodiments of the present application, for a technical feature, the technical features in the technical features are distinguished by "first", "second", "third", "A", "B", "C" and "D", etc., and the technical features described by "first", "second", "third", "A", "B", "C" and "D" are not in order or in order of magnitude.

The correspondence shown in the tables in the present application can be configured or predefined. The values of the information in each table are only examples and can be configured to other values, and are not limited to the present application. When configuring the correspondence between information and parameters, it is not necessary to configure all the correspondences shown in each table. For example, in the table in the present application, the correspondence shown in some rows can also be left unconfigured. For example, you can make appropriate deformation adjustments based on the above table, such as splitting, merging, etc. The names of the parameters indicated in the headings of the tables above may also be other names that are understandable to the communication device, and the values or representations of the parameters may also be other values or representations that are understandable to the communication device. Other data structures can also be used in the implementation of each of the above tables, such as arrays, queues, containers, stacks, linear tables, pointers, linked lists, trees, graphs, structs, classes, heaps, hash tables, or hash tables.

The predefinition in the present application can be understood as defining, predefining, storing, pre-storing, pre-negotiating, pre-configuring, curing, or pre-firing.

Those skilled in the art may realize that the units and algorithm steps of each example described in combination with the embodiments disclosed herein can be realized by electronic hardware, or a combination of computer software and electronic hardware. Whether these functions are performed in hardware or software depends on the specific application and design constraints of the technical solution. A skilled person may use different methods to achieve the described function for each particular application, but such implementation shall not be considered outside the scope of the present application.

A person skilled in the art can clearly understand that, for the convenience and conciseness of the description, the specific working process of the system, device and unit described above can refer to the corresponding process in the above method embodiments, and will not be repeated herein.

It should be understood that steps can be reordered, added, or removed using the various forms of processes shown above. For example, the steps described in the embodiments of the present application may be executed in parallel, sequentially, or in different sequences, and this article is not limited herein as long as the desired result of the technical solution disclosed in the present invention can be achieved.

The above specific embodiments do not constitute a limitation on the scope of protection of the present invention. A person skilled in the art should understand that various modifications, combinations, sub combinations, and substitutions can be made according to the design requirements and other factors. Any modifications, equivalent substitutions and improvements made within the spirit and principles of the present invention shall be included in the scope of protection of the present invention.

## Claims

1. A method for resource configuration, performed by a terminal device, comprising:
receiving random access channel (RACH) configuration information for multiple PRACH transmissions sent by a network device;
determining a configuration resource for the multiple PRACH transmissions according to the RACH configuration information for the multiple PRACH transmissions; and
performing the multiple PRACH transmissions on the configuration resource.

2. The method according to claim 1, wherein the RACH configuration information for the multiple PRACH transmissions comprises at least one of:
a first RACH resource configuration, wherein the first RACH resource configuration is suitable for a terminal device supporting a feature combination of coverage enhancement;
a second RACH resource configuration, wherein the second RACH resource configuration is suitable for a terminal device supporting other feature combinations; or
a third RACH resource configuration, wherein the third RACH resource configuration is suitable for a terminal device supporting no feature combination.

3. The method according to claim 2, wherein the configuration resource for the multiple PRACH transmissions is at least one of:
a RACH occasion (RO) shared with a RACH configuration resource not configured for the multiple PRACH transmissions; or
a separate RACH occasion (RO) dedicated to the multiple PRACH transmissions.

4. The method according to claim 3, wherein in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multiple PRACH transmissions.

5. The method according to claim 3, wherein in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-FrequencyStart;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootSequenceIndex;
msg1-SubcarrierSpacing;
restrictedSetConfig;
msg3-transformPrecoder;
ra-PrioritizationForAccessIdentity;
prach-RootSequenceIndex;or
number of the multiple PRACH transmissions.

6. The method according to claim 4 or 5, wherein, the number of the multiple PRACH transmissions has a correspondence with the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

7. The method according to claim 2, wherein in response to the RACH configuration information for the multiple PRACH transmissions comprising the first RACH resource configuration, the first RACH resource configuration comprises first indication information, and the first indication information is configured to indicate that the first RACH resource configuration is configured for the multiple PRACH transmissions.

8. The method according to claim 2, wherein in response to the RACH configuration information for the multiple PRACH transmissions comprising the second RACH resource configuration, feature combination indication information in the second RACH resource configuration comprises second indication information, and the second indication information is configured to indicate that the second RACH resource configuration is configured for the multiple PRACH transmissions.

9. The method according to claim 2, wherein the RACH configuration information for the multiple PRACH transmissions comprises: RACH resource configuration information for 4-step random access and/or RACH resource configuration information for 2-step random access.

10. The method according to claim 9, wherein in response to the RACH configuration information for the multiple PRACH transmissions comprising the first RACH resource configuration, the first RACH resource configuration comprises the RACH resource configuration information for the 4-step random access.

11. The method according to claim 2, wherein the RACH configuration information for the multiple PRACH transmissions comprises: RACH resource configuration information for contention based random access (CBRA) and/or RACH resource configuration information for contention free random access (CFRA).

12. The method according to claim 11, wherein the RACH configuration information for the multiple PRACH transmissions comprises at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block (SSB) indexes for the multiple PRACH transmissions.

13. The method according to claim 11, wherein the RACH resource configuration information for the CFRA comprises at least one of:
a RACH resource configuration for the CFRA triggered based on a physical downlink control channel (PDCCH) order;
a RACH resource configuration for the CFRA triggered based on cell handover;
a RACH resource configuration for the CFRA triggered based on addition or change of primary secondary cell; or
a RACH resource configuration for the CFRA triggered based beam failure recovery (BFR).

14. The method according to claim 11, wherein the RACH resource configuration information for the CBRA comprises at least one of:
a RACH resource configuration for the CBRA triggered based on beam failure recovery (BFR);
a RACH resource configuration for the CBRA triggered based on cell handover; or
a RACH resource configuration for the CBRA triggered based on addition or change of primary secondary cell.

15. A method for resource configuration, performed by a network device, comprising:
sending random access channel (RACH) configuration information for multiple PRACH transmissions to a terminal device,
wherein the RACH configuration information for the multiple PRACH transmissions is configured to determine a configuration resource for the multiple PRACH transmissions; and
the configuration resource is configured to perform the multiple PRACH transmissions.

16. The method according to claim 15, wherein the RACH configuration information for the multiple PRACH transmissions comprises at least one of:
a first RACH resource configuration, wherein the first RACH resource configuration is suitable for a terminal device supporting a feature combination for coverage enhancement;
a second RACH resource configuration, wherein the second RACH resource configuration is suitable for a terminal device supporting other feature combinations; or
a third RACH resource configuration, wherein the third RACH resource configuration is suitable for a terminal device supporting no feature combination.

17. The method according to claim 16, wherein the configuration resource for the multiple PRACH transmissions is at least one of:
a RACH occasion (RO) shared with a RACH configuration resource not configured for the multiple PRACH transmissions; or
a separate RACH occasion (RO) dedicated to the multiple PRACH transmissions.

18. The method according to claim 17, wherein in response to the configuration resource for the multiple PRACH transmissions being the shared RACH occasion (RO), the RACH configuration information for the multiple PRACH transmissions is configured to configure at least one of parameters of the shared RACH occasion (RO):
preambleReceivedTargetPower;
powerRampingStep;
preambleTransMax;
ra-ResponseWindow;
ra-ssb-OccasionMaskIndex;
rsrp-ThresholdSSB-SUL;
preamble start offset;
number of preambles; or
number of the multi-PRACH transmissions.

19. The method according to claim 17, wherein in response to the configuration resource for the multiple PRACH transmissions being the separate RACH occasion (RO), the RACH configuration information for the multiple PRACH transmissions is configured to configure at least one of parameters of the separate RACH occasion (RO):
prach-ConfigurationIndex;
msg1-FDM;
msg1-FrequencyStart;
zeroCorrelationZoneConfig;
preambleReceivedTargetPower;
preambleTransMax;
powerRampingStep;
ra-ResponseWindow;
totalNumberOfRA-Preambles;
ssb-perRACH-OccasionAndCB-PreamblesPerSSB;
rsrp-ThresholdSSB-SUL;
ra-ContentionResolutionTimer;
prach-RootSequenceIndex;
msg1-SubcarrierSpacing;
restrictedSetConfig;
msg3-transformPrecoder;
ra-PrioritizationForAccessIdentity;
prach-RootSequenceIndex; or
number of the multiple PRACH transmissions.

20. The method according to claim 18 or 19, wherein,
the number of the multiple PRACH transmissions has a correspondence with the terminal device; or
the number of the multiple PRACH transmissions has a correspondence with a bandwidth part where the multiple PRACH transmissions reside; or
the number of the multiple PRACH transmissions has a correspondence with the RACH configuration information for the multiple PRACH transmissions.

21. The method according to claim 16, wherein in response to the RACH configuration information for the multiple PRACH transmissions comprising the first RACH resource configuration, the first RACH resource configuration comprises first indication information, and the first indication information is configured to indicate that the first RACH resource configuration is configured for the multiple PRACH transmissions.

22. The method according to claim 16, wherein in response to the RACH configuration information for the multi-RACH transmission comprises the second RACH resource configuration, feature combination indication information in the second RACH resource configuration comprises second indication information, and the second indication information is configured to indicate that the second RACH resource configuration is configured for the multiple PRACH transmissions.

23. The method according to claim 16, wherein the RACH configuration information for the multiple PRACH transmissions comprises: RACH resource configuration information for 4-step random access and/or RACH resource configuration information for 2-step random access.

24. The method according to claim 23, wherein in response to the RACH configuration information for the multiple PRACH transmissions comprising the first RACH resource configuration, the first RACH resource configuration comprises the RACH resource configuration information for the 4-step random access.

25. The method according to claim 16, wherein the RACH configuration information for the multiple PRACH transmissions comprises: RACH resource configuration information for contention based random access (CBRA) and/or RACH resource configuration information for contention free random access (CFRA).

26. The method according to claim 25, wherein the RACH configuration information for the multiple PRACH transmissions comprises at least one of indication information:
number of the multiple PRACH transmissions;
position indication information of a plurality of RACH occasions (ROs) where the multiple PRACH transmissions reside;
a plurality of preamble indexes for the multiple PRACH transmissions; or
a plurality of synchronization signal block (SSB) indexes for the multiple PRACH transmissions.

27. The method according to claim 25, wherein the RACH resource configuration information for the CFRA comprises at least one of:
a RACH resource configuration for the CFRA triggered based on a physical downlink control channel (PDCCH) order;
a RACH resource configuration for the CFRA triggered based on cell handover;
a RACH resource configuration for the CFRA based on addition or change of primary secondary cell; or
a RACH resource configuration for the CFRA triggered based on beam failure recovery (BFR).

28. The method according to claim 25, wherein the RACH resource configuration information for the CBRA comprises at least one of:
a RACH resource configuration for the CBRA triggered based beam failure recovery (BFR);
a RACH resource configuration for the CBRA triggered based on cell handover; or
a RACH resource configuration for the CBRA triggered based on addition or change of primary secondary cell.

29. A device for resource configuration, applied to a terminal device, comprising:
a transceiver unit configured to receive random access channel (RACH) configuration information for multiple PRACH transmissions sent by a network device; and
a processing unit configured to determine a configuration resource for the multiple PRACH transmissions according to the RACH configuration information for the multiple PRACH transmissions,
wherein the transceiver unit is further configured to perform the multiple PRACH transmissions on the configuration resource.

30. A device for resource configuration, applied to a network device, comprising:
a transceiver unit configured to send random access channel (RACH) configuration information for multiple PRACH transmissions to a terminal device,
wherein the RACH configuration information for the multiple PRACH transmissions is configured to determine a configuration resource for the multiple PRACH transmissions; and
the configuration resource is configured to perform the multiple PRACH transmissions.

31. A communication device, comprising a processor and a memory having a computer program stored thereon, wherein the processor executes the computer program stored on the memory, to cause the device to perform a method according to any one of claims 1 to 14.

32. A communication device, comprising a processor and a memory having a computer program stored thereon, wherein the processor executes the computer program stored on the memory, to cause the device to perform a method according to any one of claims 15 to 28.

33. A communication device, comprising: a processor and an interface circuit,
wherein the interface circuit is configured to receive code instructions and transmit them to the processor; and
the processor is configured to run the code instructions to perform a method according to any one of claims 1 to 14.

34. A communication device, comprising: a processor and an interface circuit,
wherein the interface circuit is configured to receive code instructions and transmit them to the processor; and
the processor is configured to run the code instructions to perform a method according to any one of claims 15 to 28.

35. A computer-readable storage medium configured to store instructions, which, when the instructions are executed, causes a method according to any one of claims 1 to 10 to be realized.

36. A computer-readable storage medium configured to store instructions, which, when the instructions are executed, causes a method according to any one of claims 11 to 15 to be realized.
